# EUROPEAN PATENT APPLICATION

(11) **EP 4 818 665 A1**
(43) Date of publication of application: **07.10.2026**
(21) Application number: 23960187.5
(22) Date of filing: 30.11.2023
(51) Int. Cl.: G01M 3/20, G01N 21/64, G01N 21/91

(54) **FLUORESCENT INSPECTION LIQUID**

(71) Applicant: SMC Corporation, Tokyo 104-0031 (JP)
(72) Inventor: KAWAMURA, Youichi, Chiba 277-0871 (JP); OKUHIRA, Hiroyuki, Chiba 277-0871 (JP); YOSHIDA, Yasunori, Chiba 277-0871 (JP)
(74) Representative: Keil & Schaafhausen Patentanwälte PartGmbB
(86) International application number: PCT/JP2023/042895
(87) International publication number: WO 2025/115169

(57) **Abstract**

The present invention relates to a fluorescent inspection liquid which is highly safe to a human body and emits blue fluorescence having high visibility in the leakage inspection. The fluorescent inspection liquid contains water as a solvent and two blue fluorescent dyes selected from a flavin derivative, quinine, pyrene and anthocyanin. The flavin derivative is a derivative having a flavin skeleton and obtained from a starting material, riboflavin.

## Description

### TECHNICAL FIELD

The present invention relates to a fluorescent inspection liquid used for a leak inspection.

### BACKGROUND ART

A leak inspection is performed on equipment required to have a sealing property and a piping system in a factory or the like. As one method of the leak inspection, there is a fluorescent leak inspection method using an inspection liquid containing a fluorescent dye (fluorescent inspection liquid). JP H10-221196 A describes using food additives (Food Red No. 2, Food Red No. 106, Food Blue No. 1, and Food Green No. 3) as fluorescent agents of fluorescent inspection liquids.

### SUMMARY OF THE INVENTION

However, regarding fluorescent inspection liquids that emit blue fluorescence (wavelengths of 360 to 500 nm), there is a problem that there is almost no fluorescent inspection liquid that is highly safe for the human body and emits vivid blue fluorescence excellent in visibility in a leak inspection.

An example of a blue fluorescent agent is a coumarin derivative. However, coumarin derivatives are toxic to the human body, and therefore, their use in food equipment, for example, is avoided. Further, another example of the substance that emits blue fluorescence is quinine. Quinine is used as a bittering agent for soft drinks (tonic water) and the like and is a substance safe for the human body. The fluorescent color of quinine is deep blue. However, there is a problem that the fluorescence of quinine is insufficient in vividness, and is difficult to distinguish from external light entering a measurement place and blue violet light emitted from a black light serving as an ultraviolet light source, and the visibility in a leak inspection is therefore poor.

Therefore, the inventors of the present application considered that there is a demand for a fluorescent inspection liquid that is excellent in safety to the human body and emits blue fluorescence excellent in visibility in a leak inspection.

The present invention has the object of solving the aforementioned problem.

An aspect of the following disclosure is characterized by a fluorescent inspection liquid containing: water serving as a solvent; a first blue fluorescent dye selected from any one of a flavin derivative, quinine, pyrene, and anthocyanin; and a second blue fluorescent dye selected from any one of the flavin derivative, quinine, pyrene, and anthocyanin, excluding the first blue fluorescent dye, wherein the flavin derivative is a derivative having a flavin skeleton and prepared using riboflavin as a starting material.

The fluorescent inspection liquid of the above aspect has relatively low toxicity to the human body, and has improved saturation of the fluorescent color and excellent visibility in a leak inspection as compared to the case of using a single blue fluorescent dye.

### BRIEF DESCRIPTION OF DRAWINGS

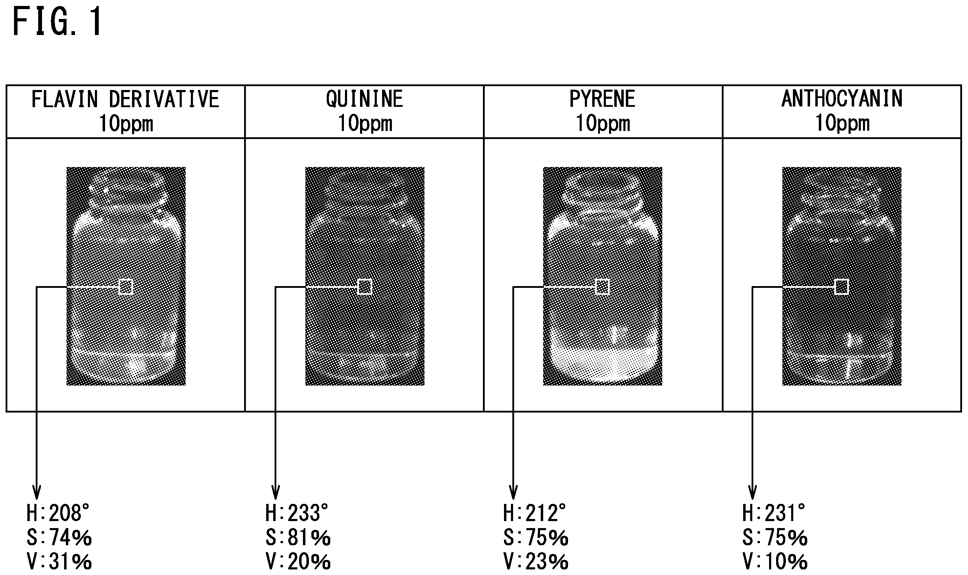

[FIG. 1] FIG. 1 shows photographs of an aqueous solution of a flavin derivative, an aqueous solution of quinine, an aqueous solution of pyrene, and an aqueous solution of anthocyanin (all having a concentration of 10 ppm) irradiated with ultraviolet light in a dark room;

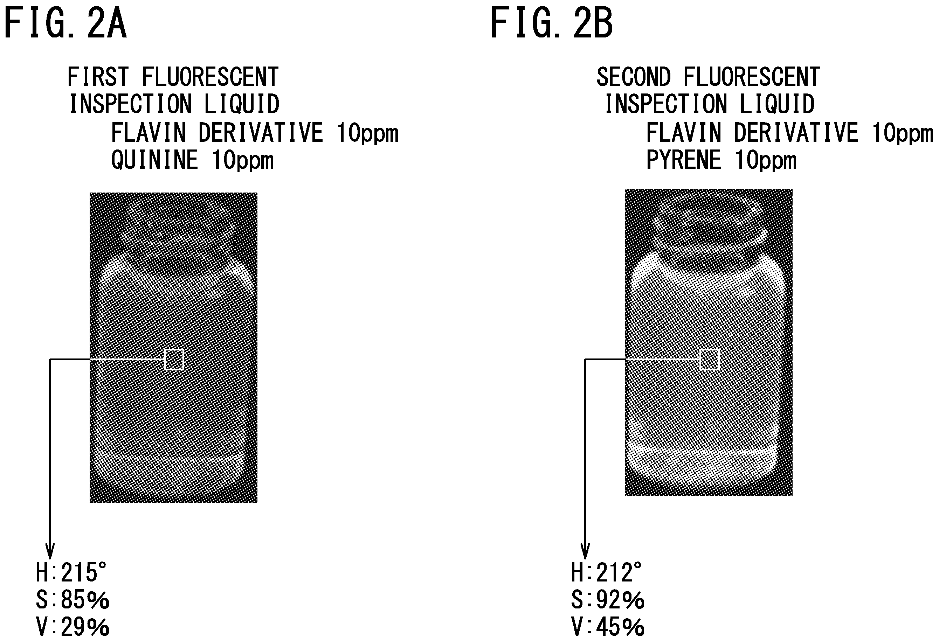

[FIG. 2] FIG. 2A is a photograph of a first fluorescent inspection liquid containing a flavin derivative and quinine (both at a concentration of 10 ppm) and irradiated with ultraviolet light in the dark room, and FIG. 2B is a photograph of a second fluorescent inspection liquid containing a flavin derivative and pyrene (both at a concentration of 10 ppm) and irradiated with ultraviolet light in the dark room;

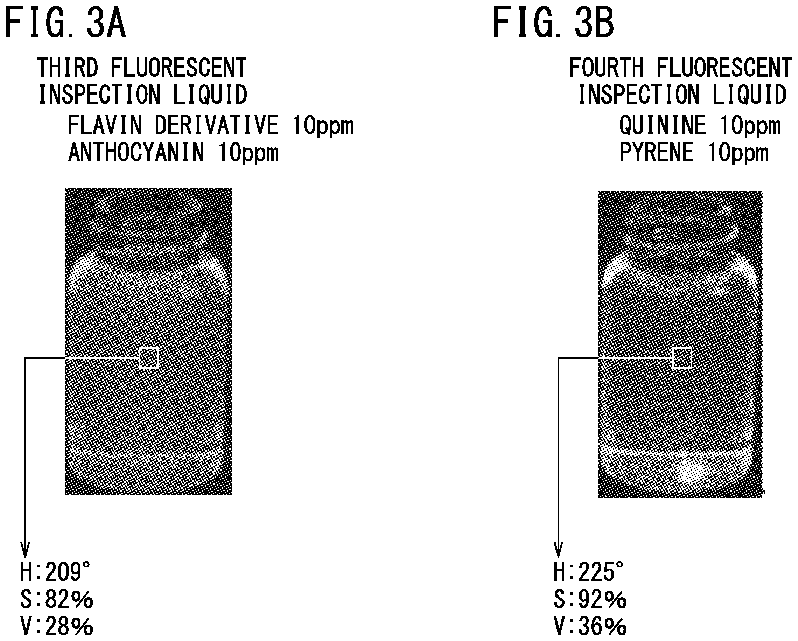

[FIG. 3] FIG. 3A is a photograph of a third fluorescent inspection liquid containing a flavin derivative and anthocyanin (both at a concentration of 10 ppm) and irradiated with ultraviolet light in the dark room, and FIG. 3B is a photograph of a fourth fluorescent inspection liquid containing quinine and pyrene (both at a concentration of 10 ppm) and irradiated with ultraviolet light in the dark room; and

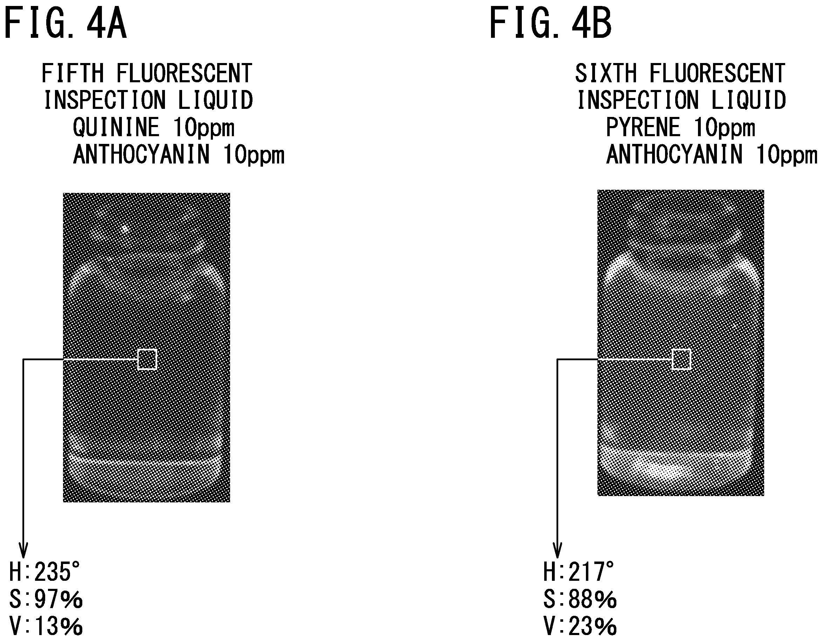

[FIG. 4] FIG. 4A is a photograph of a fifth fluorescent inspection liquid containing quinine and anthocyanin (both at a concentration of 10 ppm) and irradiated with ultraviolet light in the dark room, and FIG. 4B is a photograph of a sixth fluorescent inspection liquid containing pyrene and anthocyanin (both at a concentration of 10 ppm) and irradiated with ultraviolet light in the dark room.

### DETAILED DESCRIPTION OF THE INVENTION

The fluorescent inspection liquid according to the present embodiment is used for a leak inspection of equipment required to have a certain degree of sealing property or piping. In the leak inspection, the fluorescent inspection liquid is sprayed in a mist form into compressed air and introduced into target equipment. When there is a leakage area in the inspection target, the fluorescent inspection liquid leaks from the leakage area, and the leakage area is stained with a blue fluorescent dye. Thereafter, when irradiated with ultraviolet light from a light source such as a black light from the outside of the inspection target, the fluorescent inspection liquid emits blue fluorescence at the leakage area, and the leakage area can be therefore visually detected.

The fluorescent inspection liquid of the present embodiment is formed of a composition in which a blue fluorescent dye is dissolved in water serving as a solvent. In the present embodiment, the blue fluorescent dye is a dye that is excited by irradiation with ultraviolet light and emits blue fluorescence (wavelengths of 360 to 500 nm). The fluorescent inspection liquid of the present embodiment contains two kinds of blue fluorescent dyes selected from a flavin derivative, quinine, pyrene, and anthocyanin. That is, the fluorescent inspection liquid contains a first blue fluorescent dye and a second blue fluorescent dye. The fluorescent inspection liquid may further contain a third blue fluorescent dye.

The flavin derivative is a derivative having a flavin skeleton and prepared using riboflavin (vitamin B2) as a starting material. The fluorescent inspection liquid may contain, as the flavin derivative, at least one of formylmethylflavin or lumichrome, for example, as a main component. Among these, lumichrome (7, 8-dimethylalloxazine) absorbs ultraviolet light and emits blue fluorescence having a fluorescence emission peak in the range of 450 to 480 nm. The flavin derivative of the present embodiment is obtained by irradiating a riboflavin aqueous solution with a sufficient amount (time) of light, and emits blue fluorescence.

The above-described flavin derivative is a substance generated as a metabolite of riboflavin in the living body, and when excessively ingested, it is excreted from the living body by the metabolic machinery in the living body similar to riboflavin. Further, the flavin derivative is also contained in foods as a photodegradation product of riboflavin, and is ingested on a daily basis. Therefore, it is considered that the fluorescent inspection liquid containing the flavin derivative has relatively low toxicity to the human body and is excellent in safety.

Quinine absorbs ultraviolet light and emits deep blue fluorescence having a fluorescence emission peak in the range of 440 to 490 nm. Quinine is used as a bittering agent for soft drinks (tonic water) and as a therapeutic agent for malaria, and has extremely low toxicity to the human body.

Pyrene absorbs ultraviolet light and emits bright blue fluorescence having a fluorescence emission peak in the range of 450 to 500 nm.

Anthocyanin is a type of plant pigment and absorbs ultraviolet light and emits deep blue fluorescence. Anthocyanin is also contained in foods and is considered to be highly safe for oral ingestion.

The total value of the concentrations of the blue fluorescent dyes contained in the fluorescent inspection liquid of the present embodiment is set in the range that satisfies the standard values of a COD (Chemical Oxygen Demand) and a BOD (Biochemical Oxygen Demand) at which discharge to the sewer is acceptable. For example, the standard values of the COD and the BOD in Japan is 160 mg/L. In the fluorescent inspection liquid used in Japan, the total value of the concentrations of the blue fluorescent dyes preferably satisfies the standard values of the COD and the BOD described above, and from such a viewpoint, the total value of the concentrations of the blue fluorescent dyes is preferably, for example, 30 ppm or lower.

In addition, since the blue fluorescent dye used in the fluorescent inspection liquid of the present embodiment is a substance that is easily decomposed (decayed) by microorganisms, the fluorescent inspection liquid may contain a preservative in order to prevent deterioration due to decay during transportation and storage. As the preservative, parahydroxybenzoate ester such as butylparaben, isopropylparaben, propylparaben, ethylparaben, or methylparaben, or an isothiazolinone derivative such as methylisothiazolinone can be used.

The concentration of the preservative can be appropriately set depending on the application. When the concentration of the preservative is in the range of 10 ppm or lower, the preservative is in the range of being acceptable as food additives. Therefore, a fluorescent inspection liquid containing a preservative of 100 ppm or lower can be used more safely for equipment handling foods. In addition, when the concentration of the preservative is in the range of 100 ppm or lower, the preservative is in the range of being acceptable for medical equipment and the like in contact with the human body. Therefore, when the concentration of the preservative is equal to or lower than 100 ppm, it is considered that, even in the case where the fluorescent inspection liquid is exposed to the skin of the user or the like, the skin is hardly irritated.

Note that a decrease in 100 ppm of methylparaben only increases the COD by about 14 mg/L and the BOD by about 11 mg/L, and the addition of the preservative has a relatively small influence on the sewage discharge standards for the fluorescent inspection liquid.

The fluorescent inspection liquid of the present embodiment includes the following six types according to the combination of the blue fluorescent dyes.
First fluorescent inspection liquid: flavin derivative and quinine
Second fluorescent inspection liquid: flavin derivative and pyrene
Third fluorescent inspection liquid: flavin derivative and anthocyanin
Fourth fluorescent inspection liquid: quinine and pyrene
Fifth fluorescent inspection liquid: quinine and anthocyanin
Sixth fluorescent inspection liquid: pyrene and anthocyanin

Among the fluorescent inspection liquids listed above, the first fluorescent inspection liquid containing a flavin derivative and quinine is safe even when orally ingested, has a high saturation S, and emits bright fluorescence, and therefore has excellent visibility. Accordingly, the first fluorescent inspection liquid is suitable for a leak inspection. For example, the first fluorescent inspection liquid contains the flavin derivative at a concentration of 5 ppm or higher and 20 ppm or lower, and the first fluorescent inspection liquid containing quinine at a concentration of 1 ppm or higher and 10 ppm or lower has an excellent balance of a hue H, a saturation S, and a value V, and has good visibility. Note that when the concentration of the flavin derivative is below the above range, the brightness of the fluorescence decreases, and it becomes difficult to use the fluorescent inspection liquid in the leak inspection. When the concentration of quinine is below 1 ppm, vivid blue fluorescence cannot be obtained. The concentration 10 ppm of quinine is close to the upper limit of the solubility of quinine in water at ambient temperature. In addition, the first fluorescent inspection liquid in which the concentrations are as described above has the COD and the BOD satisfying the sewage discharge standards of 160 mg/L or less, and the waste liquid treatment after use is easy. Furthermore, the first fluorescent inspection liquid is decomposed in a relatively short time of about several hours to several days in the atmosphere. Therefore, the influence on the environment can be suppressed.

Hereinafter, the results of examining the luminance (light amount) of the fluorescent color, a hue H, a saturation S, and a value V of the aqueous solution of a single blue fluorescent dye and the first to sixth fluorescent inspection liquids will be described.

First, the light amount of fluorescence of the first fluorescent inspection liquid to the sixth fluorescent inspection liquid when irradiated with ultraviolet light was examined. As a result, in the first fluorescent inspection liquid, the second fluorescent inspection liquid, and the third fluorescent inspection liquid, an increase in the light amount of the fluorescence of about 1.1 times to 1.5 times that of the blue fluorescent dye alone was observed. It should be noted that no increase in the light amount of the fluorescence was observed in the third fluorescent inspection liquid, the fifth fluorescent inspection liquid, and the sixth fluorescent inspection liquid that contain anthocyanin. Anthocyanin absorbs light having a wavelength of about 500 nm and is therefore considered to contribute little to the increase in light amount. Next, the hue H, the saturation S, and the value V were examined.

FIG. 1 shows photographs of an aqueous solution of a flavin derivative (for example, a photodegradation product of riboflavin), an aqueous solution of quinine, an aqueous solution of pyrene, and an aqueous solution of anthocyanin under ultraviolet light irradiation. An HSV color space expresses the color of each aqueous solution obtained from the image, by a combination of three values of the hue H, the saturation S, and the value V, and the values of the HSV color space are shown below the photograph of each aqueous solution.

The aqueous solution of the flavin derivative at a concentration of 10 ppm had a hue H of 208°, a saturation S of 74%, and a value V of 31%. Further, the aqueous solution of quinine at a concentration of 10 ppm had a hue H of 233°, a saturation S of 81%, and a value V of 20%. The aqueous solution of pyrene at a concentration of 10 ppm had a hue H of 212°, a saturation S of 75%, and a value V of 23%. The aqueous solution of anthocyanin had a hue H of 231°, a saturation S of 75%, and a value V of 10%.

The first fluorescent inspection liquid shown in FIG. 2A is an aqueous solution containing a flavin derivative at a concentration of 10 ppm and quinine at a concentration of 10 ppm. The first fluorescent inspection liquid had a hue H of 215°, a saturation S of 85%, and a value V of 29%. From this result, it was confirmed that the value of the saturation S of the first fluorescent inspection liquid, which was 85%, was higher than the value of the saturation S of the aqueous solution of the flavin derivative, which was 74%, and the value of the saturation S of the aqueous solution of quinine, which was 81%, and that the visibility was improved.

The second fluorescent inspection liquid in FIG. 2B is an aqueous solution containing a flavin derivative at a concentration of 10 ppm and pyrene at a concentration of 10 ppm. The second fluorescent inspection liquid had a hue H of 212°, a saturation S of 92%, and a value V of 45%. It was confirmed that the value of the saturation S of the second fluorescent inspection liquid, which was 92%, was higher than the value of the saturation S of the aqueous solution of the flavin derivative, which was 74%, and the value of the saturation S of the aqueous solution of pyrene, which was 75%, and that the visibility was improved due to the improvement of the saturation S.

The third fluorescent inspection liquid in FIG. 3A is an aqueous solution containing a flavin derivative at a concentration of 10 ppm and anthocyanin at a concentration of 10 ppm. The third fluorescent inspection liquid had a hue H of 209°, a saturation S of 82%, and a value V of 28%. It was confirmed that the value of the saturation S of the third fluorescent inspection liquid, which was 82%, was higher than the value of the saturation S of the aqueous solution of the flavin derivative, which was 74%, and the value of the saturation S of the aqueous solution of anthocyanin, which was 75%, and that the visibility was improved.

The fourth fluorescent inspection liquid in FIG. 3B is an aqueous solution containing quinine at a concentration of 10 ppm and pyrene at a concentration of 10 ppm. The fourth fluorescent inspection liquid had a hue H of 225°, a saturation S of 92%, and a value V of 36%. It was confirmed that the value of the saturation S of the fourth fluorescent inspection liquid, which was 92%, was higher than the value of the saturation S of the aqueous solution of quinine, which was 81%, and the value of the saturation S of the aqueous solution of pyrene, which was 75%, and that the visibility was improved.

The fifth fluorescent inspection liquid in FIG. 4A is an aqueous solution containing quinine at a concentration of 10 ppm and anthocyanin at a concentration of 10 ppm. The fifth fluorescent inspection liquid had a hue H of 235°, a saturation S of 97%, and a value V of 13%. It was confirmed that the value of the saturation S of the fifth fluorescent inspection liquid, which was 97%, was higher than the value of the saturation S of the aqueous solution of quinine, which was 81%, and the value of the saturation S of the aqueous solution of anthocyanin, which was 75%, and that the visibility was improved.

The sixth fluorescent inspection liquid in FIG. 4B is an aqueous solution containing pyrene at a concentration of 10 ppm and anthocyanin at a concentration of 10 ppm. The sixth fluorescent inspection liquid had a hue H of 217°, a saturation S of 88%, and a value V of 23%. It was confirmed that the value of the saturation S of the sixth fluorescent inspection liquid, which was 88%, was higher than the value of the saturation S of the aqueous solution of pyrene, which was 75%, and the value of the saturation S of the aqueous solution of anthocyanin, which was 75%, and that the visibility was improved.

As described above, according to the embodiment, a fluorescent inspection liquid that emits blue fluorescence having a high saturation S is obtained, and visibility in a leak inspection can be improved. In addition, the fluorescent inspection liquid according to the embodiment has little influence on the human body and the environment, and can be used for various applications.

It should be noted that the present invention is not limited to the above disclosure, and various modifications are possible without departing from the essence and gist of the present invention. The following supplementary notes are further disclosed in relation to the above-described disclosure.

### (Supplementary Note 1)

An aspect is characterized by the fluorescent inspection liquid containing: water serving as a solvent; the first blue fluorescent dye selected from any one of the flavin derivative, quinine, pyrene, and anthocyanin; and the second blue fluorescent dye selected from any one of the flavin derivative, quinine, pyrene, and anthocyanin, excluding the first blue fluorescent dye, wherein the flavin derivative is a derivative having a flavin skeleton and prepared using riboflavin as a starting material. Such a fluorescent inspection liquid is excellent in safety, and further has a higher saturation and is more excellent in visibility in a leak inspection than an aqueous solution of the first blue fluorescent dye alone or the second blue fluorescent dye alone.

### (Supplementary Note 2)

In the fluorescent inspection liquid according to Supplementary Note 1, the first blue fluorescent dye may be the flavin derivative, and the second blue fluorescent dye may be quinine. In this fluorescent inspection liquid, the blue fluorescent dye is a substance contained in foods, and is excellent in safety even when orally ingested. Therefore, this fluorescent inspection liquid can be suitably used for, for example, a leak inspection for food equipment or the like, which requires safety.

### (Supplementary Note 3)

The fluorescent inspection liquid according to Supplementary Note 2 may contain the flavin derivative as the first blue fluorescent dye at a concentration of 5 ppm or higher and 20 ppm or lower, and may contain quinine as the second blue fluorescent dye at a concentration of 1 ppm or higher and 7 ppm or lower. This fluorescent inspection liquid exhibits vivid blue fluorescence, and has the values of the COD and the BOD below the sewage discharge standards of 160 mg/L, and therefore, the liquid can be discharged into the sewer, and the waste liquid after the inspection can be flushed into the sewer.

### (Supplementary Note 4)

In the fluorescent inspection liquid according to Supplementary Note 1, the first blue fluorescent dye may be the flavin derivative, and the second blue fluorescent dye may be pyrene. Such a fluorescent inspection liquid has a higher saturation and is more excellent in visibility in a leak inspection than an aqueous solution of the first blue fluorescent dye alone or the second blue fluorescent dye alone.

### (Supplementary Note 5)

In the fluorescent inspection liquid according to Supplementary Note 1, the first blue fluorescent dye may be the flavin derivative, and the second blue fluorescent dye may be anthocyanin. Such a fluorescent inspection liquid has a higher saturation and is more excellent in visibility in a leak inspection than an aqueous solution of the first blue fluorescent dye alone or the second blue fluorescent dye alone.

### (Supplementary Note 6)

In the fluorescent inspection liquid according to Supplementary Note 1, the first blue fluorescent dye may be quinine, and the second blue fluorescent dye may be pyrene. Such a fluorescent inspection liquid has a higher saturation and is more excellent in visibility in a leak inspection than an aqueous solution of the first blue fluorescent dye alone or the second blue fluorescent dye alone.

### (Supplementary Note 7)

In the fluorescent inspection liquid according to Supplementary Note 1, the first blue fluorescent dye may be quinine, and the second blue fluorescent dye may be anthocyanin. Such a fluorescent inspection liquid has a higher saturation and is more excellent in visibility in a leak inspection than an aqueous solution of the first blue fluorescent dye alone or the second blue fluorescent dye alone.

### (Supplementary Note 8)

In the fluorescent inspection liquid according to Supplementary Note 1, the first blue fluorescent dye may be pyrene, and the second blue fluorescent dye may be anthocyanin. Such a fluorescent inspection liquid has a higher saturation and is more excellent in visibility in a leak inspection than an aqueous solution of the first blue fluorescent dye alone or the second blue fluorescent dye alone.

### (Supplementary Note 9)

The fluorescent inspection liquid according to any one of Supplementary Notes 1 to 8 may contain, as the flavin derivative, at least one of formylmethylflavin or lumichrome as a main component. This fluorescent inspection liquid is excellent in safety, can suppress a load on the environment, and exhibits blue fluorescence excellent in visibility, and therefore is suitable for a leak inspection.

## Claims

1. A fluorescent inspection liquid containing:
water serving as a solvent;
a first blue fluorescent dye selected from any one of a flavin derivative, quinine, pyrene, and anthocyanin; and
a second blue fluorescent dye selected from any one of the flavin derivative, quinine, pyrene, and anthocyanin, excluding the first blue fluorescent dye,
wherein the flavin derivative is a derivative having a flavin skeleton and prepared using riboflavin as a starting material.

2. The fluorescent inspection liquid according to claim 1, wherein the first blue fluorescent dye is the flavin derivative, and the second blue fluorescent dye is quinine.

3. The fluorescent inspection liquid according to claim 2, wherein the fluorescent inspection liquid contains the flavin derivative as the first blue fluorescent dye at a concentration of 5 ppm or higher and 20 ppm or lower, and contains quinine as the second blue fluorescent dye at a concentration of 1 ppm or higher and 7 ppm or lower.

4. The fluorescent inspection liquid according to claim 1, wherein the first blue fluorescent dye is the flavin derivative, and the second blue fluorescent dye is pyrene.

5. The fluorescent inspection liquid according to claim 1, wherein the first blue fluorescent dye is the flavin derivative, and the second blue fluorescent dye is anthocyanin.

6. The fluorescent inspection liquid according to claim 1, wherein the first blue fluorescent dye is quinine, and the second blue fluorescent dye is pyrene.

7. The fluorescent inspection liquid according to claim 1, wherein the first blue fluorescent dye is quinine, and the second blue fluorescent dye is anthocyanin.

8. The fluorescent inspection liquid according to claim 1, wherein the first blue fluorescent dye is pyrene, and the second blue fluorescent dye is anthocyanin.

9. The fluorescent inspection liquid according to any one of claims 1 to 8, wherein the fluorescent inspection liquid contains, as the flavin derivative, at least one of formylmethylflavin or lumichrome as a main component.
